Europäisches Patentamt

European Patent Office

Office européen des brevets

(11) Veröffentlichungsnummer: **0 385 934**
**A1**

# (12) EUROPÄISCHE PATENTANMELDUNG

(21) Anmeldenummer: 90810115.7

(22) Anmeldetag: 19.02.90

(51) Int. Cl.5: **B65G 65/00, B65G 1/02,**
**B65G 1/04, B21D 43/20**

(30) Priorität: 27.02.89 CH 712/89

(43) Veröffentlichungstag der Anmeldung:
05.09.90 Patentblatt 90/36

(84) Benannte Vertragsstaaten:
AT BE CH DE DK ES FR GB IT LI LU NL SE

(71) Anmelder: **SPT AG, SPANLOSE PRODUKTIONSTECHNIK**
**Glatthaldenstrasse 16**
**CH-9230 Flawil(CH)**

(72) Erfinder: **Laager, Goerg**
**Steinackerweg 6**
**CH-8488 Turbenthal(CH)**
Erfinder: **Schnyder, Peter**
**Ennetbach 3**
**CH-8754 Netstal(CH)**

(74) Vertreter: **Hepp, Dieter et al**
**Hepp, Wenger & Partner AG Marktgasse 18**
**CH-9500 Wil(CH)**

(54) **Vorrichtung zur Aufnahme eines Coil sowie Verfahren und Vorrichtung zu dessen Lagerung.**

(57) Zum Entnehmen eines Coils (1) aus einem Hochraumlager (12) bzw. zum Beschicken eines Hochraumlagers (12) mit einem Coil (1) ist eine Aufnahme-Vorrichtung (6) für ein oder mehrere Coils (1) vorgesehen. Die Aufnahme-Vorrichtung trägt die Coils (1) seitlich von deren Mittelpunkt und lässt wenigstens eine Seite zum Einführen des Tragarms (10) eines Manipulators (9) frei. Die Coils werden durch eine Regalbedienungs-Einrichtung (11) zusammen mit der Aufnahme-Vorrichtung (6) aus dem Lager-Gestell (7) entnommen. Die Aufnahme-Vorrichtung (6) weist eine Auflager-Anordnung auf, die mit Lager-Streben (3) versehen ist, welche das Coil seitlich unterstützen.

FIG.1

## Vorrichtung zur Aufnahme eines Coil sowie Verfahren und Vor-richtung zu dessen Lagerung

Die Erfindung betrifft eine Vorrichtung zur Aufnahme von wenigstens einem scheibenförmigen Halbfabrikat-Teil, insbesondere einer Rolle aus bandförmigem oder drahtförmigem Material, z.B. Rohblech (Coil) mit einem Rahmen und einer Coil-Auflager-Anordnung; ausserdem bezieht sich die Erfindung auf ein Verfahren zum Lagern eines Coils in einer Lager-Gestell-Anordnung einer automatisch beschickten Anlage zur Verarbeitung des Coil-Materials sowie zum Transportieren des Coils vom Lager-Gestell zur Verarbeitungs-Anlage und eine Anordnung zum Lagern und Transportieren eines Coils, das in einem Lager-Gestell gelagert und einer Verarbeitungsanlage, insbesondere einer Presse zugeführt werden soll. Vorrichtungen bzw. Verfahren und Anordnungen zur Coil-Lagerung sind z.B. aus der deutschen Auslegeschrift 28 42 448 sowie den deutschen Offenlegungsschriften 34 35 215, 34 17 130 und 26 39 427 bekannt.

Für die Aufnahme von Coils sind dabei sowohl kassettenartige Behälter zur liegenden Lagerung des Coil als auch Anordnungen zum "stehenden" Lagern von Coils vorgesehen. In der Praxis haben sich meist Kassetten zur Aufnahme von Coils durchgesetzt. Derartige Kassetten nehmen jeweils ein Coil auf. In der Kassettenwand befindet sich ein Schlitz zur Entnahme, d.h. zum Abrollen des Coil. Das Coil wird in der Kassette sowohl gelagert als auch am Entnahmeort, z.B. einer Presse, in der Kassette belassen und aus dieser kontinuierlich abgezogen.

Ersichtlicherweise eignet sich ein derartiges Handling in einer Kassette gut für "just-in-time"-Fertigung, d.h. für Anwendungsfälle, bei denen das Coil mehrfach zwischen Lager und Presse in der Kassette hin- und herbefördert wird, wobei jedesmal nur Teilmengen entnommen werden. Für jedes einzelne Coil wird dabei aber eine Kassette benötigt. Das Coil muss in die Kassette eingelegt und zusammen mit dieser manipuliert werden. Bei der Lagerung in Hochregalen entsteht ein relativ grosser Platzbedarf für die Kassetten, die einzeln gelagert und einzeln entnommen werden müssen.

Noch grösserer Platzbedarf ergibt sich wenn die Coils stehend in Lager-Gestellen gelagert werden.

Aufgabe der Erfindung ist es, ein universelles System zu schaffen, insbesondere also eine Vorrichtung, ein Verfahren und eine Anlage der eingangs geschilderten Art zu optimieren und vor allem den Platzbedarf für die Lagerung, die Manipulation und die Automatisierungsmöglichkeiten auch für schwere Coils zu verbessern. Erfindungsgemäss wird diese Aufgabe in erster Linie gemäss Kennzeichen von Anspruch 1, Anspruch 7 und Anspruch 10 gelöst.

Ersichtlicherweise erlaubt die erfindungsgemässe Aufnahme-Vorrichtung auf optimal einfache Weise das Lagern eines oder mehrerer Coils in der Vorrichtung, wobei die Aufnahme-Vorrichtung sowohl automatisch beschickt als auch Coils automatisch aus der Aufnahme-Vorrichtung entnommen werden können. Zum Beschicken mit bzw. zur Entnahme von Coils schlägt die Erfindung vor, die Aufnahme-Vorrichtung vorübergehend aus dem Lager-Gestell zu entnehmen und unmittelbar nach dem Beschicken bzw. dem Entnahmevorgang die Aufnahme-Vorrichtung wieder im Lager-Gestell abzustellen. Die Aufnahme-Vorrichtung dient also zur geordneten Lagerung eines Coil oder mehrerer Coils im Lagergestell sowie zur Vereinfachung und Automatisierung des Beschickungs- bzw. Entnahmevorgangs. Die Aufnahme-Vorrichtung bleibt im Gegensatz zu herkömmlichen Kassetten dabei nicht mit dem Coil während seines Transports zur Presse verbunden. Die Aufnahme-Vorrichtung stellt eine reine Lager-und Manipulationshilfe dar. Mit ihrer Hilfe kann das Coil optimal einfach einem Manipulator übergeben werden oder von einem Manipulator übernommen werden. Aufgrund der erfindungsgemässen Ausbildung der Aufnahme-Vorrichtung lässt sich die Uebernahme/Uebergabe einfach dadurch bewerkstelligen, dass der Manipulator mit einem Tragarm ausgestattet wird, welcher von einer Seite in die Aufnahme-Vorrichtung eingeschoben wird, bis er ein Coil bis über dessen Mittelpunkt hinaus untergreift. Durch Absenken der Aufnahme-Vorrichtung bzw. Anheben des Tragarms kann dann das Coil quasi auf dem Tragarm abgelegt und mit dessen Hilfe aus der Aufnahme-Vorrichtung herausgezogen werden. Die Aufnahme-Vorrichtung kann sodann zusammen mit den in ihr verbliebenen Coils wieder zurück ins Lager-Gestell gefördert werden. Dies wird vor allem dadurch ermöglicht, dass die Aufnahme-Vorrichtung einseitig offen ist und das Coil oder die Coils nur in einem Teilbereich der Coil-Auflagefläche trägt. Am freibleibenden Teil der Coil-Auflagefläche kann der Tragarm beim Beschicken und bei der Entnahme angreifen.

Sofern mehrere Coils aus der Aufnahme-Vorrichtung entnommen werden sollen, kann selbstverstandlich die Aufnahme-Vorrichtung so lange aus dem Lager-Gestell entnommen bleiben, bis der Entnahme-Vorgang abgeschlossen ist.

Die Aufnahme-Vorrichtung ist vorzugsweise mit einem Rahmen versehen, der zusammen mit Lager-Streben die Coils derart trägt, dass jedes Coil zu beiden Seiten des Coil-Mittelpunkts abgestützt wird, wobei das Coil aufgrund seiner Steifigkeit den freien Raum zwischen den Lager-Streben so überbrücken kann, dass der mittlere Bereich des Coils frei liegt.

Daneben können selbstverständlich auch noch weitere Streben, z.B. kammartig vorgesehen sein, ohne dass der Grundgedanke der Erfindung verlassen würde.

Eine besonders kompakte und im Handling einfache Aufnahme-Vorrichtung ergibt sich, wenn bei einer Mehrzahl von Auflager-Anordnungen für je ein Coil ein Rahmen vorgesehen ist, der etwa U-förmig ausgebildete Abschnitte aufweist, in welche das Coil von der freien Seite her einschiebbar ist, und wenn die Lager-Streben jeweils die beiden Rahmen-Schenkel mit dem quer verlaufenden Rahmen-Abschnitt der U-Form verbinden.

Die Streben können dabei rohrförmig oder als Rechteckprofile ausgebildet sein. Auch ist es selbstverständlich möglich, als Auflager eine Metallplatte anzuordnen. Wichtig ist, dass sich eine Auflage-Fläche ergibt, auf welcher das Coil ohne Kippgefahr aufliegt.

Sofern das Coil zu klein ist, um den freien Raum zwischen den Lagerstreben zu überbrücken oder wenn das Coil nicht biegesteif genug ist oder geschützt werden soll, kann es vorteilhaft auf einer scheibenartigen Träger-Anordnung abgelegt oder auch befestigt sein, und zusammen mit der Träger-Anordnung auf den Streben abgelegt und auch manipuliert werden.

Ersichtlicherweise ist die Erfindung nicht auf die Anwendung im Zusammenhang mit Coils beschränkt, sondern es können auch andere geeignete Objekte mit ähnlicher geometrischer Konfiguration, z.B. Platten, grosse Metall-Ringe, rechteckige Körper etc. auf die erfindungsgemässe Weise gelagert, manipuliert und transportiert werden.

Die Erfindung ist im folgenden in Ausführungsbeispielen anhand der Zeichnungen näher erläutert. Es zeigen:

Figur 1 Die schematische Darstellung eines Ausschnitts aus einer Anlage zum Lagern und Transportieren von Coils von einem Lagergestell zu einer Presse;

Figur 2 die schematische Darstellung einer Aufnahme-Vorrichtung bei der Entnahme aus einem Lagergestell mittels einer Regalbedienungs-Einrichtung;

Figur 3 die Aufnahme-Vorrichtung gemäss Figur 2 nach Entnahme aus dem Lager-Gestell und vor Uebergabe an einen Manipulator;

Figur 4 die schematische Draufsicht auf die Anordnung gemäss Figur 3;

Figur 5 bis 7 den Ablauf der Uebergabe eines Coil von der Aufnahme-Vorrichtung an den Manipulator;

Figur 8a) und 8b) eine abgewandelte Aufnahme-Vorrichtung in der Seitenansicht und in der Ansicht von der offenen Seite der U-förmigen Rahmenkonstruktion her,

Figur 9 die Aufnahme-Vorrichtung gemäss Figur 8 in der Draufsicht, sowie

Figur 10 ein abgewandeltes Ausführungsbeispiel einer Aufnahme-Vorrichtung zur Aufnahme von rechteckigen Objekten und

Figur 11 eine Träger-Anordnung zum Einschieben in die Aufnahme-Vorrichtung gemäss Figur 10.

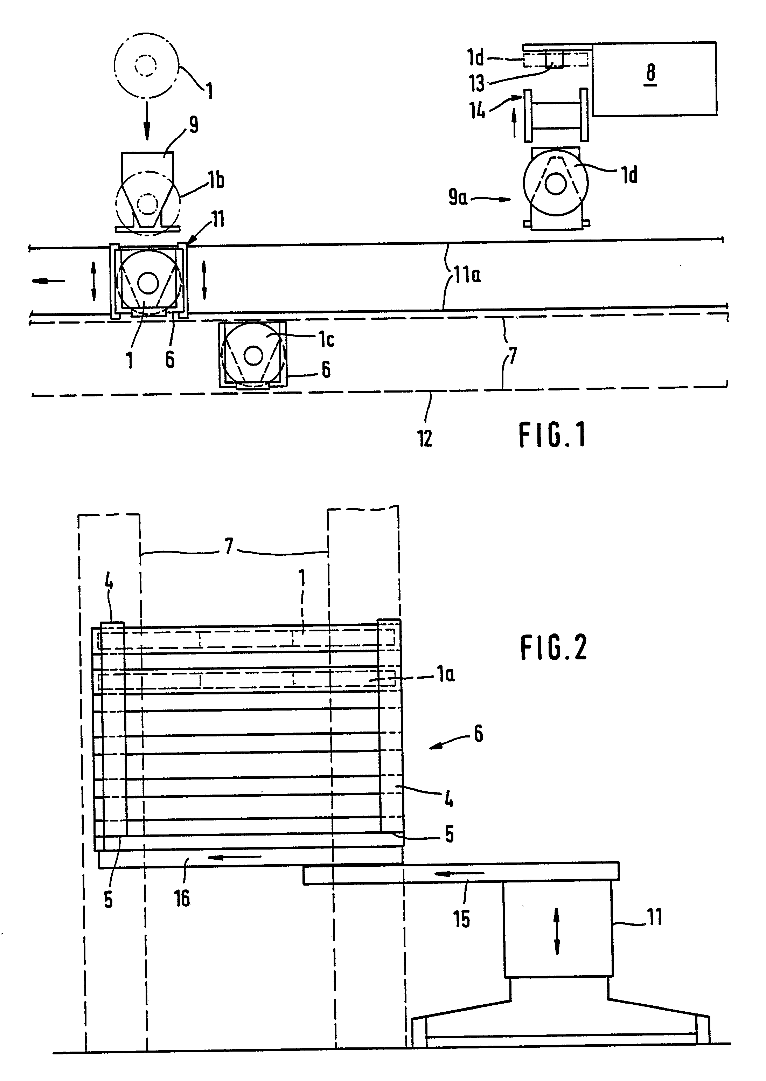

Gemäss Figur 1 sind im schematisch angedeuteten Lager-Gestell 7 eines nicht näher dargestellten Hochraumlagers 12 auf entsprechenden Querstreben oder Tablaren Aufnahme-Vorrichtungen 6 lagerbar. Die Aufnahme-Vorrichtungen 6 enthalten oder liefern eine Mehrzahl von Coils 1, 1a, 1b, 1c und 1d, welche mittels eines Manipulators 9a einer Presse 8 zugeführt wer den können. Der Manipulator 9 ist ebenso wie der Manipulator 9a stationär angeordnet. Von einer nicht dargestellten Zufuhreinrichtung wird dem Manipulator 9 ein Coil 1b übergeben um mittels der Regalbedienungs-Einrichtung 11 in der nachstehend beschriebenen Weise im Lager-Gestell 7 gelagert zu werden. Selbstverständlich können auch andere Objekte als Coils 1 übernommen und gelagert werden. In der Praxis kann selbstverständlich das Hochraumlager 12 aus einer Mehrzahl von Lager-Gestellen 7 bestehen. Ausserdem sind in der Regel mehrere Pressen 8 vorgesehen, die durch einen oder mehrere Manipulatoren 9 mit Hilfe der Regalbedienungs-Einrichtung 11 beschickbar sind. Solche Anpassungen sind dem Fachmann allgemein geläufig.

Zur Uebergabe eines Coils 1d auf einen Wickel-Dorn 13 der Presse 8 ist eine Handling-Einrichtung 14 vorgesehen, welche das Coil 1d vom zweiten Manipulator 9a abnimmt, es in vertikale Position bringt und auf den Dorn 13 aufsteckt. Die Handling-Einrichtung ist nicht Gegenstand der vorliegenden Erfindung und deshalb nicht näher erläutert.

Bei grossen Anlagen lassen sich selbstverständlich zusätzlich zu den Manipulatoren 9, 9a auch noch andere Fördermittel vorsehen.

Zum Transport von Coils von Manipulator 9 zum Lager-Gestell 7 bzw. von Lager-Gestell 7 zum zweiten Manipulator 9a ist eine Regalbedienungs-Einrichtung 11 vorgesehen, welche entlang einer Bahn 11a vor dem Lager-Gestell 7 verfahrbar ist. Mittels der Regalbedienungs-Einrichtung 11 kann jeweils eine Aufnahme-Vorrichtung 6 aus der jeweiligen Lager-Höhe im Regal herausgenommen, ggf. abgesenkt und dem Manipulator 9a übergeben werden, wie dies nachstehen noch naher erläutert wird. Die Regalbedienungs-Einrichtung 11 kann dabei ersichtlicherweise auf verschiedene Arten realisiert werden: Sie kann entweder "von vorne" in das Lager-Gestell 7 eingreifen, um eine Aufnahme-Vorrichtung 6 zu entnehmen oder sie kann hängend oder auf andere Weise angeordnet werden.

Figur 2 zeigt in vergrössertem Massstab wie durch eine Regalbedienungs-Einrichtung 11 mit ausfahrbaren Greifern 15, 16 eine Aufnahme-Vorrichtung 6 in einem gestrichelt angedeuteten Lager-Gestell 7 zur Entnahme angehoben wird, wo es auf einem nicht dargestellten Tablar steht. In der Aufnahme-Vorrichtung 6 befinden sich zwei Coils 1, 1a die dem Lager-Gestell 7 bzw. der Aufnahme-Vorrichtung 6 entnommen werden sollen.

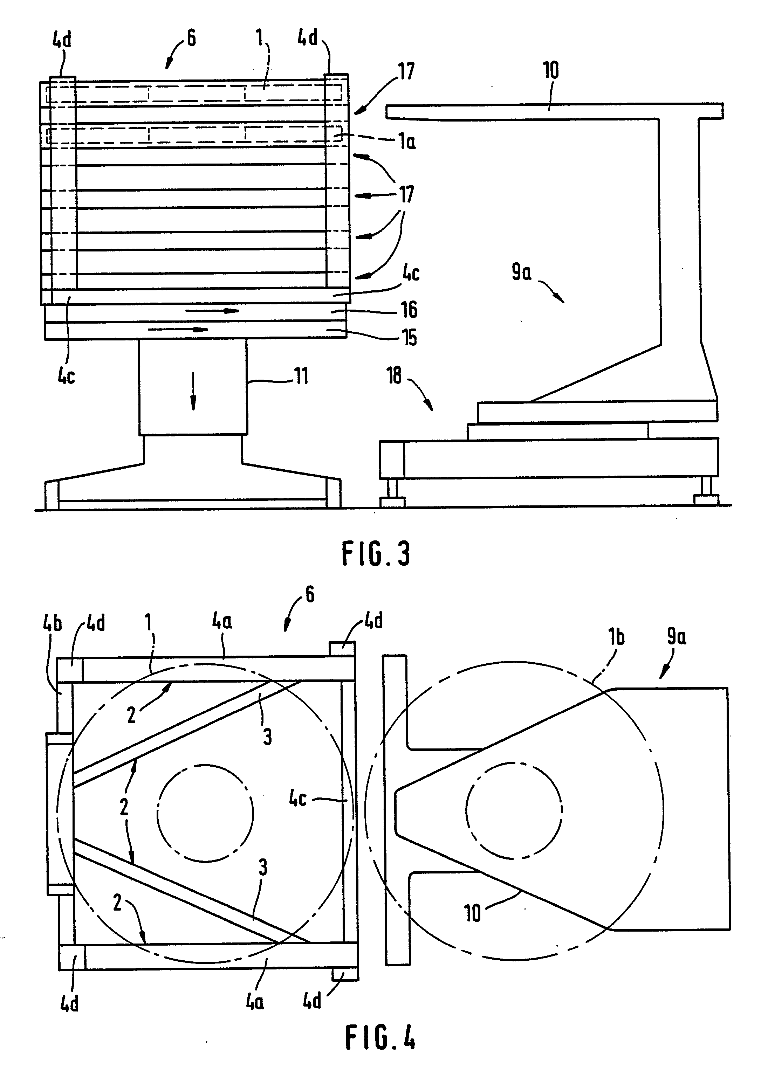

Figur 3 zeigt, wie durch Rückziehen der Greifer 15, 16 die Aufnahme-Vorrichtung 6 aus dem Lager-Gestell 7 herausgenommen wurde. Zur Uebergabe eines Coils wird die RegalbedienungsEinrichtung 11 fluchtend mit dem Manipulator 9a ausgerichtet. Die Regalbedienungs-Einrichtung 11 wird jetzt derart abgesenkt, dass ein Tragarm 10 des Manipulators 9a mit dem horizontalen Spalt 17 in der Aufnahme-Vorrichtung 6 fluchtet, der sich unter dem Coil 1 befindet, das aus dem Lager-Gestell 7 bzw. der Aufnahme-Vorrichtung 6 entnommen werden soll. Wie auch aus Figur 4 ersichtlich ist, besteht die Aufnahme-Vorrichtung 6 aus einem Rahmen 4, der aus vertikalen Trägern 4d und einem allseitig geschlossenen Auflage-Rahmen 4c besteht. Die vertikalen Träger 4d und der Auflage-Rahmen 4c sind miteinander verschweisst, so dass sie das Grundgerüst der Aufnahme-Vorrichtung 6 bilden. Horizontal sind mit Abstand übereinander U-förmige Rahmen-Abschnitte mit Schenkeln 4a und einem quer verlaufenden Schenkel 4b an den vertikalen Trägern 4d befestigt. Der Abstand zwischen den übereinander angeordneten U-förmigen Abschnitten 4a, 4b ist derart gewählt, dass in der Aufnahme-Vorrichtung 6 übereinander eine Mehrzahl von Coils 1 eingebracht und abgelegt werden können. Zwischen den U-förmigen Abschnitten 4a, 4b bzw. den abgelegten Coils befindet sich jeweils ein Spalt 17, in welchem der Tragarm 10 eingeschoben werden kann.

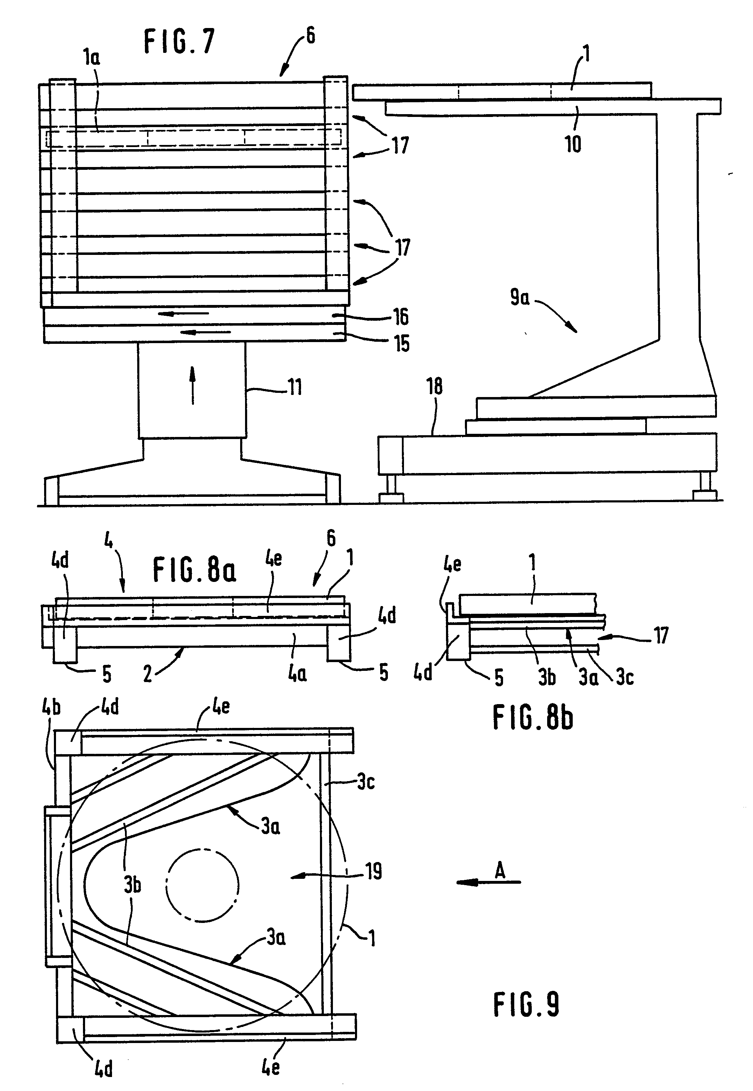

Um eine stabile Konstruktion der Aufnahme-Vorrichtung bei zuverlässiger Auflage der Coils zu gewährleisten, sind jeweils zwischen einem quer verlaufenden Rahmen-Abschnitt 4b und dem zugehörigen seitlichen Schenkel 4a Lager-Streben 3 eingeschweisst. Die Lager-Streben 3 sind dabei so angeordnet, dass sie die Schenkel 4a etwa V-förmig mit dem quer verlaufenden Rahmen-Abschnitt 4b verbinden. Ausserdem sind sie derart im Bereich ausserhalb des Zentrums des Coils 1 angeordnet, dass dessen mittlerer Abschnitt frei liegt. Jedes Coil liegt also sowohl im Randbereich an den Schenkeln 4a und dem quer verlaufenden Abschnitt 4b als auch auf den Lager-Streben 3 auf. Auf der einen Manipulator 9 oder 9a zugewandten Seite ist die Aufnahme-Vorrichtung 6 zum Einbringen des Tragarms 10 zugänglich und der Bereich unter jedem Coil 6 ist frei. (Dies ist auch aus der Darstellung gemäss Figur 8b einer Aufnahme-Vorrichtung für ein einzelnes Coil ersichtlich.)

Zur Aufgabe eines Coils 1 an den Manipulator 9a wird die Regalbedienungs-Einrichtung auf der Bahn 11a verfahren und mit dem Manipulator 9a seitlich ausgerichtet.

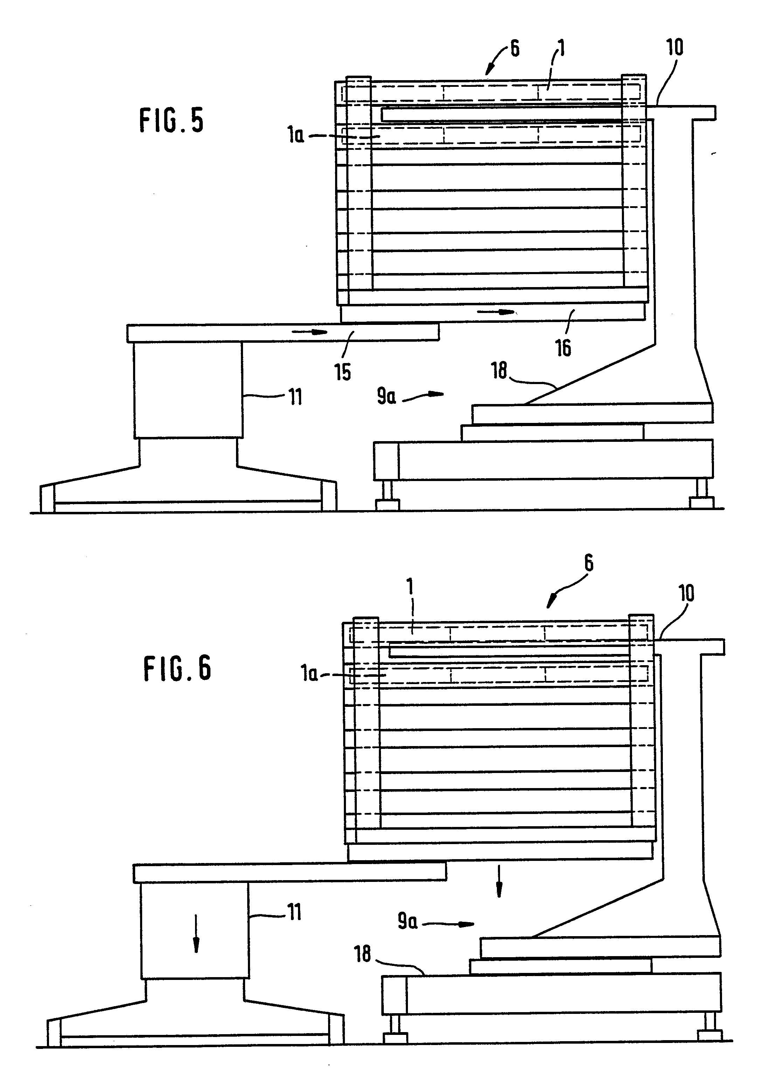

Die Manipulatoren 9 und 9a können mit Hilfe des nicht näher dargestellten schwenkbaren Unterbaus 18 so mit der herangefahrenen Regalbedienungs-Einrichtung 11 in der Höhe ausgerichtet werden, wie dies vor allem aus Figur 3 und 4 ersichtlich ist. In dieser Stellung fluchtet der Tragarm 10 deshalb sowohl in der Höhe mit einem zugeordneten Spalt 17 als auch seitlich mit dem durch die Streben 3 begrenzten Freiraum unter dem Coil 1, das aus der Aufnahme-Vorrichtung 6 entnommen werden soll, um in die gestrichelte Position 1b gemäss Figur 4 gebracht zu werden. Dazu werden die Greifer 15, 16 der Regalbedienungs-Einrichtung 11 gemäss Figur 5 so weit nach rechts verfahren, dass sich der Tragarm 10 im Freiraum zwischen den Streben 3 unter dem Coil 1 befindet. Anschliessend wird gemäss Figur 6 die Regalbedienungs-Einrichtung 11 etwas abgesenkt, so dass das Coil 1 auf dem Tragarm 10 liegt und dessen Last damit voll durch Tragarm 10 und Manipulator 9a übernommen wird. Wie in Figur 7 dargestellt ist, können jetzt die Greifer 15, 16 wieder zurückgezogen werden, so dass die Aufnahme-Vorrichtung 6 nach links transportiert wird. Das Coil 1 bleibt auf dem Tragarm 10 liegen. Jetzt kann das Coil 1 gemäss Figur 1 vom Manipulator 9a an die Handling-Einrichtung 14 der Presse 8 übergeben werden (Fig.1). Die Aufnahme-Vorrichtung 6 kann entweder mittels der Regalbedienungs-Einrichtung 11 in das Lager-Gestell 7 zurückgefördert werden oder sie kann zum Manipulator 9 gefahren werden, um wieder aufgefüllt zu werden.

Um die Aufnahme-Vorrichtung 6 mit Coils zu beschicken, kann ersichtlicherweise der gleiche Ablauf wie vorstehend beschrieben genutzt werden: Durch den Manipulator 9 wird ein Coil 1 von einer nicht dargestellten Zufuhreinrichtung übernommen. Manipulator 9 und Regalbedienungs-Einrichtung 11 werden sowohl seitlich als auch in der Höhe ausgerichtet, damit der Tragarm 10 mit einem Spalt 17 bzw. mit dem Freiraum zwischen den Streben 3 fluchtet. Anschliessend wird die Aufnahme-Vorrichtung 6 mittels der Regalbedienungs-Einrichtung 11 verlagert, bis das Coil 1 sich in der gewünschten Position in der Aufnahme-Vorrichtung 6 befindet. Durch Anheben der Regalbedienungs-Einrichtung 11 wird das Coil 1 vom Tragarm 10 abgehoben, sobald das Coil 1 auf den Streben 3 bzw. den Schenkeln 4a aufliegt. Anschliessend kann die Aufnahme-Vorrichtung 6 zurückgezogen, vom Manipulator 9 getrennt und durch die Regalbedienungs-Einrichtung 11 an der gewünschten vertikalen und/oder horizontalen Position im Lager-Gestell 7 abgestellt werden.

Figuren 8a, 8b und 9 zeigen ein Ausführungsbeispiel, bei welchem die Aufnahme-Vorrichtung 6 nur aus einem einzigen Paar von Schenkeln 4a zur Aufnahme eines einzigen Coils besteht. Figur 8a zeigt dabei die Aufnahme-Vorrichtung in Sei tenansicht, Figur 8b zeigt die Aufnahme-Vorrichtung von der offenen Seite der U-förmigen Rahmenabschnitte 4a, 4b (d.h. aus der Richtung A gemäss Figur 9) und Figur 9 zeigt eine Draufsicht zu Figur 8a. Die Schenkel 4a sind dabei durch eine horizontale Platte 3a mit dem quer verlaufenden Abschnitt 4b des Rahmens 4 verbunden. Die Platte 3a dient analog den Lager-Streben 3 als Auflagefläche für ein Coil. Zur Verstärkung ist die Platte 3a mit Rippen 3b versehen. Um einen Freiraum für den Tragarm 10 zu schaffen, ist die Platte 3a mit einer Aussparung 19 versehen, so dass das Coil in der vorstehend beschriebenen Weise durch eine Regalbedienungs-Einrichtung 11 einem Manipulator 9 übergeben werden kann. Dabei ist es selbstverständlich auch denkbar, dass auch der Manipulator 9 wenigstens so weit anhebbar bzw. absenkbar ist, dass die Lastübernahme oder Lastübergabe eines Coil von der Aufnahme-Vorrichtung 6 bzw. an die Aufnahme-Vorrichtung 6 ermöglicht wird. Durch die Verwendung der Aufnahme-Vorrichtung 6 wird in jedem Fall das Handling von Coils entscheidend verbessert: Das Coil kann ohne den Einsatz von komplizierten Greiferanordnungen horizontal gelagert und an den Manipulator 9 übergeben werden, wobei besonders vorteilhafte, platzsparende Lagerung mehrere Coils in einer Aufnahme-Vorrichtung 6 möglich ist.

Die Anordnung eines Winkelprofils 4e auf den Rahmen-Schenkeln 4a (Figur 8b) gewährleistet, dass das Coil 1 nicht seitlich vom Rahmen 4 rutschen kann. Eine zusäzliche Querstrebe 3c versteift die Gesamtanordnung, wobei gemäss Figur 8b der Spalt 17 über Querstrebe 3c noch hoch genug ist, um das Einschieben des Tragarms 10 unter ein Coil zu ermöglichen.

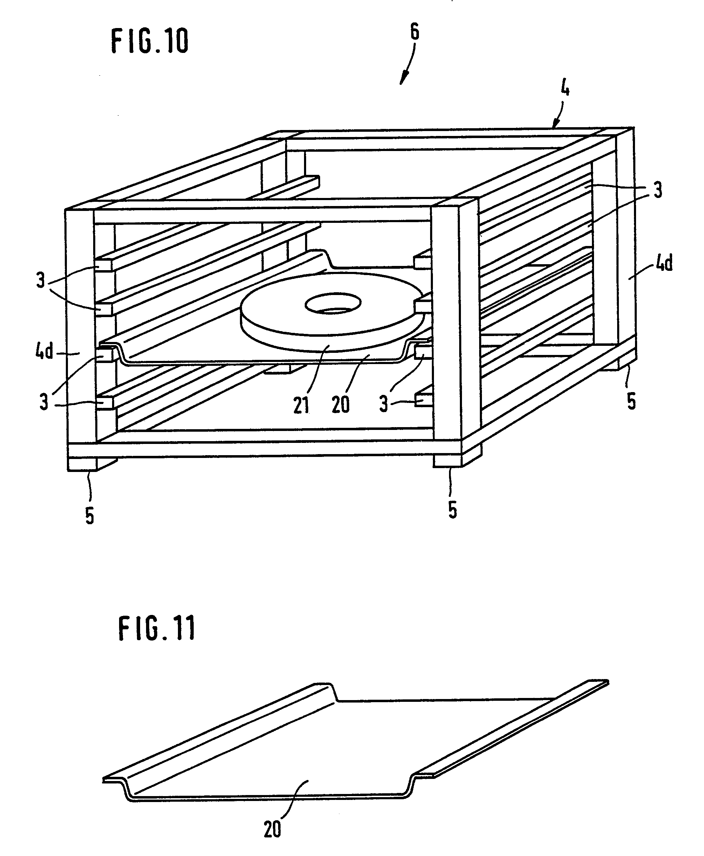

Das Ausführungsbeispiel gemäss Figur 10 zeigt eine abgewandelte Aufnahme-Vorrichtung 6. Gleiche Teile sind dabei mit gleichen Bezugsziffern versehen.

Wie dargestellt ist dabei ein aus Rechteck-Rohren geschweisster Rahmen 4 mit Trag-Punkten 5 und Lager-Streben 3 vorgesehen. Die Lager-Streben 3 sind dabei seitlich am Rahmen 4 angeordnet, so dass sie schienenartige Auflager für rechteckige Objekte bilden. Die scheibenartige Träger-Anordnung 20 gemäss Figur 11 bildet ein solches Objekt. Mit Hilfe der Träger-Anordnung 20 lassen sich auch Coils 21 in der Aufnahme-Vorrichtung 6 lagern, die entweder zu schmal sind, um auf den Lager-Streben 3 abgestützt zu werden oder aber die zu wenig stabil sind, um nur an wenigen Lager-Punkten abgestützt zu werden. Mittels der Trager-Anordnung 20 lässt sich also das Einsatzgebiet der Erfindung auf eine praktisch unbegrenzte Auswahl von Objekten erweitern. Beim Einsatz von Träger-Anordnungen 20 muss selbstverständlich eine Einrichtung vorgesehen sein, um bei der Regal-Beschickung zunächst die Coils 21 oder andere Objekte auf einer Trager-Anordnung 20 zu lagern bzw. um bei der Lager-Entnahme die Objekte wieder von der Träger-Anordnung 20 zu nehmen, sobald die Träger-Anordnung 20 mit Hilfe eines Manipulators 9a aus der Aufnahme-Vorrichtung genommen wurde. Derartige Handling und Transporthilfsmittel sind dem Fachmann geläufig und im übrigen nicht Gegenstand der vorliegenden Erfindung. Alternativ ist es aber auch denkbar, als Träger-Anordnung 20 speziell ausgebildete Coil-Kassetten zu verwenden, die auf die beschriebene Weise mit Hilfe der Aufnahme-Vorrichtung 6 platzsparend gelagert und auf optimal einfache Weise transportiert und manipuliert werden können, ohne von dem daraufliegenden bzw. damit verbundenen Coil 21 getrennt zu werden.

## Ansprüche

1. Vorrichtung zur Aufnahme von wenigstens einen scheibenförmigen Halbfabrikat-Teil, insbesondere einer Rolle aus bandförmigem oder drahtförmigem Material, z.B. Rohblech (Coil) (1) mit einem Rahmen (4) und mit einer Coil-Auflager-Anordnung, dadurch gekennzeichnet, dass die Auflager-Anordnung wenigstens zwei Lager-Streben (3) zum Aufnehmen und Tragen eines liegenden Coils in einem Teilbereich der Coil-Auflagefläche aufweist, dass die Lager-Streben (3) so am Rahmen (4) angeordnet sind, dass das Coil (1) zu beiden Seiten des Coil-Mittelpunkts abgestützt wird, wobei das Coil den freien Raum über den Lager-Streben (3) so überbrücken kann, dass der mittlere Bereich des Coils von einem Rand des Coils bis über dessen Mittelpunkt hinaus frei liegt, und dass der Rahmen an seiner Unterseite Trag-Punkte (5) oder Trag-Flächen zum Abstellen und/oder Manipulieren der Aufnahme-Vorrichtung (6) aufweist.

2. Vorrichtung nach Anspruch 1, dadurch gekennzeichnet, dass zur Aufnahme von zwei oder mehr Coils (1, 1a) am Rahmen (4) übereinander eine Mehrzahl von Auflager-Anordnungen (2) im vertikalen Abstand zueinander angeordnet sind.

3. Vorrichtung nach Anspruch 1 oder 2, dadurch gekennzeichnet, dass der Rahmen (4) etwa U-förmig ausgebildete Abschnitte (4a, 4b) aufweist, in welche das Coil von der freien Seite her einschiebbar ist, und dass wenigstens zwei Lager-Streben (3) zwischen den beiden Rahmen-Schenkeln (4a) und dem quer verlaufenden Rahmen-Abschnitt (4b) etwa V-förmig angeordnet sind, so dass das Coil (1) zu beiden Seiten des Coil-Mittelpunkts abgestützt ist.

4. Vorrichtung nach einem der vorangegangenen Ansprüche, dadurch gekennzeichnet, dass die U-förmigen Rahmen-Abschnitte (4a, 4b) und die Lager-Streben (3) in der Coil-Auflage-Ebene verlaufen und Coil-Auflage-Flächen bilden.

5. Vorrichtung nach einem der vorangegangenen Ansprüche, dadurch gekennzeichnet, dass der Rahmen (4) aus einem Profil-Rohr besteht, auf dessen einem Schenkel (4a, 4b) das Coil (1) im Bereich des äusseren Rands abstützbar ist.

6. Vorrichtung nach einem der vorangegangenen Ansprüche, dadurch gekennzeichnet, dass eine scheibenartige Träger-Anordnung (20) vorgesehen ist, auf der einerseits das Coil (1) ablegbar ist und die andererseits so an die Auflager-Anordnung angepasst ist, dass sie auf die Lager-Streben (3) und/oder den Rahmen-Abschnitten (4a, 4b) auflegbar ist.

7. Verfahren zum Lagern eines Coils (1) in einer Lager-Gestell-Anordnung einer automatisch beschickten Anlage zur Verarbeitung des Coil-Materials sowie zum Transportieren des Coils vom Lager-Gestell (7) zur Verarbeitungsanlage (8), dadurch gekennzeichnet, dass wenigstens ein Coil (1, 1c) in einer Aufnahme-Vorrichtung (6) liegend im Lager-Gestell (7) gelagert wird, dass zur Coil-Entnahme oder zur Beschickung mit einem Coil die Aufnahme-Vorrichtung (6) vorübergehend aus dem Lager-Gestell (7) genommen wird, dass sodann das Coil (1) von der Aufnahme-Vorrichtung (6) einem Manipulator (9) übergeben oder von einem Manipulator (9) der Aufnahme-Vorrichtung (6) übergeben wird.

8. Verfahren nach Anspruch 7 zur Durchführung mit einer Aufnahme-Vorrichtung (1) bei welcher die Unterseite der Coils (1) teilweise von wenigstens einer Seite der Aufnahme-Vorrichtung (6) her zugänglich ist, insbesondere mit einer Aufnahme-Vorrichtung nach einem oder mehreren der Ansprüche 1 bis 5, dadurch gekennzeichnet, dass die Aufnahme-Vorrichtung (6) aus dem Lager-Gestell (7) genommen wird, dass der Tragarm (10) eines Manipulators (9) seitlich in die Aufnahme-Vorrichtung (6) unter dem freiliegenden Abschnitt des Coils (1) eingeführt wird, und dass sodann die Aufnahme-Vorrichtung (6) relativ zum Tragarm (10) so weit abgesenkt und/oder der Tragarm relativ zur Aufnahme-Vorrichtung (6) so weit angehoben wird, dass das Coil (1) auf dem Tragarm (10) liegt, und dass sodann der Tragarm (10) mit dem daraufliegenden Coil (1) aus der Aufnahme-Vorrichtung (6) gezogen wird.

9. Verfahren nach Anspruch 7 oder 8, dadurch gekennzeichnet, dass das Coil (1) auf der Träger-Anordnung (20) und zusammen mit dieser gelagert, manipuliert und transportiert wird.

10. Anordnung zum Lagern und Transportieren eines Coils (1), das in einem Lager-Gestell (7) gelagert und einer Verarbeitungsanlage (8), insbesondere einer Presse zugeführt werden soll, gekennzeichnet, durch eine Aufnahme-Vorrichtung (6) zur liegenden Aufnahme eines oder mehrerer Coils (1), welche das Coil nur an einem oder mehreren Abschnitten der Coil-Auflagefläche trägt, und die auf wenigstens einer Seite zum Einlegen und zum Entnehmen des oder der Coils geöffnet ist, weiter gekennzeichnet, durch eine Regalbedienungs-Einrichtung (11) zum Entnehmen der Aufnahme-Vorrichtung (6) aus dem Lager-Gestell (7) und einem mit dem Lager-Gestell und/oder der Förder-Einrichtung zum Entnehmen eines Coils aus dem Lager-Gestell bzw. der Aufnahme-Vorrichtung oder zum Beschicken der Aufnahme-Vorrichtung und damit des Lager-Gestells mit einem Coil, zusammenwirkenden Manipulator (9).

11. Anordnung nach Anspruch 10, dadurch gekennzeichnet, dass das Coil (1) auf einer Träger-Anordnung (20) gelagert und transportiert wird.

12. Anordnung nach Anspruch 10 oder 11, gekennzeichnet durch eine Aufnahme-Vorrichtung (6) nach einem oder mehreren der Ansprüche 1 bis 6.

FIG.1

FIG.2

FIG.3

FIG.4

FIG.5

FIG.6

EP 0 385 934 A1

FIG.7

FIG.8a

FIG.8b

FIG.9

FIG.10

FIG.11

Europäisches Patentamt

**EUROPÄISCHER RECHERCHENBERICHT**

Nummer der Anmeldung

EP 90 81 0115

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-1 959 093 (INDUSTRIAL MODULAR SYSTEMS)<br>* Seite 13, Zeile 15 - Seite 18, Zeile 4; Figuren 1-6 *<br>--- | 1-4,7-12 | B 65 G 65/00<br>B 65 G 1/02<br>B 65 G 1/04<br>B 21 D 43/20 |
| Y | GB-A-2 124 941 (MANNESMANN)<br>* Das ganze Dokument *<br>----- | 1-4,7-12 | |
| | | | **RECHERCHIERTE SACHGEBIETE (Int. Cl.5)**<br><br>B 65 G<br>B 65 D<br>B 23 Q<br>B 21 D<br>H 01 L |

Der vorliegende Recherchenbericht wurde für alle Patentansprüche erstellt

| Recherchenort | Abschlußdatum der Recherche | Prüfer |
|---|---|---|
| DEN HAAG | 07-06-1990 | OSTYN T.J.M. |